# EUROPEAN PATENT SPECIFICATION

(11) **EP 2 114 545 B1**
(45) Date of publication and mention of the grant of the patent: **22.10.2014**
(21) Application number: 07719901.6
(22) Date of filing: 01.06.2007
(51) Int. Cl.: B01D 24/14, B01D 24/46, B01D 35/02, C02F 1/00, E03F 5/14

(54) **LOW OPERATING HEAD POLISHING SAND FILTER**
POLISHING-SANDFILTER MIT NIEDRIGER BETRIEBSDRUCKHÖHE
FILTRE À SABLE POUR LE POLISSAGE À FAIBLE PRESSION FILTRANTE

(30) Priority: 03.01.2007 US 883197 P
(43) Date of publication of application: 11.11.2009
(73) Proprietor: Oasis Filter Ltd., Calgary, AB T2G 5J4 (CA)
(72) Inventor: MANZ, David, H., Calgary, Alberta T2L 1C5 (CA)
(74) Representative: Isarpatent
(86) International application number: PCT/CA2007/000985
(87) International publication number: WO 2008/080214

(56) References cited:
- WO-A1-02/36234
- CN-A- 1 554 590
- GB-A- 2 388 557
- JP-A- 06 134 451
- US-A- 4 668 405
- US-A- 6 123 858
- MANZ: 'New Horizons for Slow Sand Filtration' ELEVENTH CANADIAN NATIONAL CONFERENCE AND SECOND POLICY FORUM ON DRINKING WATER AND THE BIENNIAL CONFERENCE OF THE FEDERAL-PROVINCIAL-TERRITORIAL COMMITTEE ON DRINKING WATER, PROMOTING PUBLIC HEALTH THROUGH SAFE DRINKING WATER, CALGARY, ALBERTA April 2004, pages 682 - 692, XP008138107

## Description

### FIELD OF THE INVENTION

This invention relates to a novel low operating head polishing sand filter.

### BACKGROUND OF THE INVENTION

Traditional or conventional designs of sand filtration are satisfactory and effective water treatment solutions in many large scale applications. However, the demands for their precise operation to achieve required performance to meet increasingly stringent water treatment regulations often result in excessive capital and operational financial burdens. Water treatment facilities that are complex to operate, generate excessive volumes of waste water or use chemicals, which may be difficult to manage properly and further complicate waste water disposal, are not desirable. Complex water treatment facilities require more skilled plant operators, which may not be available or affordable in many circumstances.

U.S. Patent No. 6,123,858, granted 26 September 2000, David H. Manz, discloses a novel intermittent slow sand filter and a method of using the intermittent filter. More particularly, this invention pertains to a novel slow sand filter which remains effective, even when intermittently operated, and which can be periodically cleaned without disturbing the action of the intermittent filter. The slow sand filter apparatus comprises a container having an upper portion and a lower portion; a water inlet in the upper portion of the container, the water inlet being connected to a supply of water; a filter material filling at least the lower portion of the container, the filter material having a top surface below the water inlet; a schmutzdeuke layer on the top surface of the filter material; a water outlet in the lower portion of the container below the top surface of the filter material; and a water level maintenance device in the upper portion which maintains water in the upper portion of the container at a maintenance level above the top surface of the filter material, the maintenance level being a balance between (1) a water maintenance level that is sufficiently deep that water falling from the water inlet onto the top of the water in the container does not significantly disturb the schmutzdeuke layer; and (2) a water maintenance level that is sufficiently shallow that oxygen from the air above the water level can diffuse through the water and reach the schmutzdeuke layer so that the schmutzdeuke layer is maintained in living condition even when there is no flow of water through the water inlet.

A Biosand Water Filter (BSF) is described in detail in a paper entitled "New Horizons for Slow Sand Filtration". The BSF is a patented water filtration technology that grew out of extensive evaluation and experience with traditional slow sand, rapid sand and pressure sand filters. The BSF is an effective, compact, simple and low cost variation of slow sand filtration that is particularly useful in circumstances where quality treatment solutions need to be provided at minimal cost and the inconvenience of simple manual operation and cleaning are appropriate. For this reason more than 300,000 BSF's, ranging in capacity from 20 litres per hour to 120,000 litres per hour are used in more than 70 countries. GB 2 388 557 is directed to a treatment system having four layers of inert particulate material such that from a top layer to a bottom layer, the coarseness of the particles decreases while the density of the particulate material increases. The layers form a filter or fluidisable bed supported upon a perforated base plate within a column having an inlet port connected to a pumped supply of untreated water which is allowed to flow from the first layer to the fourth layer and exit the system as treated water. The system includes a means for backwashing the filter.

WO 02/36234 discloses a water treatment system suitable for the elimination of Cryptosporidium oocysts from water that includes a filter bed comprising four layers of inert particulate material such that, from the top layer to the bottom layer, the coarsness of the particle decreases while the density of the particulate material increases.

The foregoing examples of the related art and limitations related thereto are intended to be illustrative and not exclusive. Other limitations of the related art will become apparent to those of skill in the art upon a reading of the specification and a study of the drawings.

### SUMMARY OF THE INVENTION

The following embodiments and aspects thereof are described and illustrated in conjunction with systems, tools and methods which are meant to be exemplary and illustrative, not limiting in scope. In various embodiments, one or more of the above-described problems have been reduced or eliminated, while other embodiments are directed to other improvements. The invention is directed to a low operating head polishing sand filter comprising (a) a plural-layer media bed comprising layers of crushed quartzite, wherein (i) the top two layers have an effective particle size of less than 0.35 mm and a uniformity coefficient of 2.05 or less; (ii) the top layer has an effective particle size of 1/2 or less than a second filtering layer; (iii) the finest (top) underdrain layer has an effective particle size at least 2 times that of the filtering layer immediately above it and a uniformity coefficient of 2 or less; and (iv) underdrain layers below the finest (top) underdrain layer are sufficiently large to prevent intermixing of the layers; whereby filtered material collects on a surface layer; (b) an untreated water inlet system; (c) an underdrain system; (d) a filtered water collection and outlet system; and (e) a backwash water inlet, collection and siphon outlet system, said backwash water inlet being controllable to introduce backwash water into the filter to break up the top layer to resuspend collected filtered material, whereby the top two layers of the media bed are fluidized when backwash water is introduced through the backwash water inlet.

In addition to the exemplary aspects and embodiments described above, further aspects and embodiments will become apparent by reference to the drawings and by study of the following detailed descriptions.

### DRAWINGS

Exemplary embodiments are illustrated in referenced figures of the drawings. It is intended that the embodiments and figures disclosed herein are to be considered illustrative rather than restrictive.
Figure 1 illustrates a top view of the low operating head polishing sand filter with system elements and water flow.
Figure 2 illustrates a cross-section of filter A' -A of Figure 1.
Figure 3 illustrates an elevation of a raw water inlet system.
Figure 4 illustrates an elevation of a filtered water collection and outlet system (standpipe).
Figure 5 illustrates an elevation of a backwash water inlet system.
Figure 6 illustrates an elevation of a backwash water collection and siphon outlet system.

### DETAILED DESCRIPTION OF THE INVENTION

Throughout the following description specific details are set forth in order to provide a more thorough understanding to persons skilled in the art. However, well known elements may not have been shown or described in detail to avoid unnecessarily obscuring the disclosure. Accordingly, the description and drawings are to be regarded in an illustrative, rather than a restrictive, sense.

It is necessary to review the important characteristics of commonly used sand filtration technologies in order to appreciate the significant advantages of the Low Operating Head Polishing Sand Filter (LHPF), as disclosed and claimed in this application.

### Rapid Sand and Pressure Sand Filters

Both rapid sand and pressure sand water filters (often called multi-media filters when the media in the filter bed is made up of more than one type of material or two or more of materials such as quartzite, anthracite or garnet sand) are commonly used as polishing filters in water treatment plants. Rapid sand filters have been used for over one hundred years. Rapid and pressure sand filters are typically used as part of conventional municipal water treatment systems in which pre-treatment is provided by adding coagulants to the water, thereby allowing the formation of coagulant flocs which capture the very small particles (including parasite cysts and oocysts) and some dissolved organic and inorganic compounds. The water containing the flocs is then sent to clarifiers or settling basins where they settle out of the water. The 'clarified water' is then sent to rapid sand (which are relatively simple to control) or to pressure sand filters (which are more complex to control) for final polishing prior to disinfection.

It is not common or practical to use either rapid sand or pressure sand filters for removing small amounts of oxidized iron or manganese as the flocs containing these metals are often too small to be efficiently captured. Other types of filter media, with an affinity for adsorbing iron and manganese, such as a natural zeolite known as greensand, are commonly used. These media do need to be chemically regenerated and significant amounts of chemically charged waste water are produced in the process.

Rapid sand filters are gravity operated sand filters; that is, the surface of the untreated water is not pressurized to provide the force necessary to cause the water to move through the filter. The required filtering force is provided by a depth of water over the filter media during operation, often one meter or more. During operation, a rapid sand filter resembles a swimming pool. Rapid sand filters normally have deep multi-layer and multi-material media beds, most of which interface with a very extensive and often massive underdrain system that also serves as the entry and distribution for very large volumes of treated water used in the backwash process. Rapid sand filters tend to be very large in structure.

Pressure sand filters are wholly contained in a closed vessel specially designed to withstand the forces resulting from operation under pressure. Pressure sand filters are very compact when compared to rapid sand filters. Similar to a rapid sand filter, a pressure filter contains several layers of media of different sizes and material. Pressure filters normally use a very compact underdrain/backwash system. When they are not filled with media, pressure sand filters are relatively light in weight and are easily transported. The media is added once the filters are deployed and the necessary piping is attached. Large capacity pressure filters may be several meters in diameter.

Both pressure and rapid sand filters force the water through the filter. Particulate material is captured in narrow ranges of the filter bed, depending on its design, until there are no longer any locations within the media for particulate entrapment. At this time, the water, which still contains the offending particulate material, is forced completely through the filter and the filter exhibits what is known as 'breakthrough' phenomena. Breakthrough is detected by an increase in turbidity of the filtered water (treated water is continuously monitored using in-line turbidity meters and alarms). Before breakthrough occurs or is observed to be starting, the rapid and pressure sand filters are cleaned using a very violent backwash process. Air and water scours and often mechanical rakes can be used to assist the cleaning process. The water backwash process is continued until the produced waste water becomes clear. The filter is then put back into production and is operated with production water sent to waste until the produced water exhibits a sufficiently low turbidity. At that time, the produced water is sent to treated water storage. The volume of waste water produced by rapid sand and pressure sand filters during the backwash process is large. During a backwash the media in the filter bed stratifies into layers with the finest and lightest material concentrating on the top. If the backwash process, or the pre-treatment used prior to filtration, is not carefully performed the filter media can be damaged (formation of mud balls, short circuiting, flushing of fines, etc.). If coagulants and other floc development or capture enhancement chemicals are used, the waste water generated during cleaning can present a disposal problem.

Minimum characteristics of media beds for both rapid sand and pressure sand filters are specified by the American Water Works Association. Nonetheless, there remains considerable opportunity for custom designs. The final design of most significant rapid sand filter systems, and less frequently, pressure filter systems are evaluated and confirmed using a pilot plant representative of the final design and operating environment.

### Traditional Slow Sand Filters and BioSand Water Filters

Traditional slow sand filters (SSF) and more recently the BioSand Water Filter (BSF) (an important variation of the slow sand filter) are known for their ability to remove very small inorganic and organic, living and dead particulate materials from water. Inorganic substances include all variety of suspended material including sand, silt, flocculated colloidal materials and oxidized iron and manganese and any substances adsorbed by them (including arsenic). Organic substances include pathogens in the form of parasites, bacteria and viruses. The filter is operated in such a manner that the filter develops a biolayer or schmutzdecke at the surface of the media bed. The removal characteristics of the schmutzdecke have been known for more than one hundred and fifty years. The performance standard of the slow sand filter and the BSF is directly attributed to their low surface loading rate, approximately one-tenth or less of that for rapid sand and pressure filters, in combination with the low operating heads and fine grained material in the surface bed. Consequently, slow sand filters have surface areas ten or more times larger than that of rapid sand filters with similar surface loading. BSF's may have surface areas five to ten times as large as rapid sand filters with similar loading. The principal limitation of slow sand filtration has been the difficulty in cleaning the filter bed once the pores at its surface are plugged to the point that the flow through the filter is diminished to unacceptable rates. The BSF overcomes the cleaning limitations of traditional slow sand filters by replacing the procedure for removing the plugged surface layer with the ability to clean this layer in place, in other words, by re-suspending the material captured in the media surface using a gentle reverse flow and surface agitation and decanting the water above the media surface, which now contains the captured material, to waste. Because traditional slow sand filters are so difficult to clean their use is not recommended for filtering water with turbidity greater than 20 NTU or water containing oxidized iron and manganese. The BSF over comes these limitations by providing a simple, easy to perform cleaning system. However, the cleaning system used by the BSF becomes more complex and expensive to install, as the filters approach the scale typically used in small to large municipal applications.

The media bed in typical slow sand filters is usually composed of material with an effective size, d₁₀, of 0.35mm or less with a uniformity coefficient of 3.0 or less. It is generally believed that the lower the d₁₀ and the uniformity coefficient, the better the filter media will perform. It is also required that the filter media meet American Water Works Associate (AWWA) standards for hardness and purity, AWWA - B -100, a requirement typically achieved by using crushed and washed quartzite or similar materials. It is important that the filter media not have particles made of soft shale or mud stones that are high in oxidized metals. The AWWA specifies a minimum depth of filter bed, not including the underdrain materials, of approximately 0.6 meters, though there is no literature or research data supporting the use of a deeper 'minimum' bed. Traditional slow sand filters have used beds of more than 1.0 meter to allow several 'cleanings'. Each cleaning removes up to 5 cm before a 're-bedding' or 'topping-up' of the filter bed is required. The depth of 0.6 m has historically been attributed to the minimum depth required for virus deactivation, though this has never been conclusively determined. When the water is disinfected after filtration, 100% virus or bacteria kills or deactivation are routinely achieved, as they are when conventional water treatment using coagulation, clarification, and rapid sand or pressure sand filtration are used. Chorine additions to treated water (or water that does not require treatment) are required throughout North America to the extent that minimum residual chlorine concentrations are detected at all points-of-use throughout the community being served. It is important to note that all pathogens that are not easily killed or deactivated by chlorination, such as the cysts and oocysts of Giardia and Cryptosporidia, must be removed. This task is readily performed by slow sand filtration technology and with some difficulty by treatment systems using rapid sand or pressure sand filtration technology. Slow sand filtration does not exhibit 'break through' of inadequately treated raw water. Also, rapid and pressure sand filters are required to 'produce to waste', which is the practice of operating the filters, after cleaning, in such a way that the produced water is sent to disposal or waste until they capture sufficient material to enhance their filtration capabilities that they produce water of a quality that can be confidently assumed to contain the oocysts or cysts or pathogenic organisms. Slow sand filters demonstrate their ability to remove inorganic suspended particles from the moment they are placed back into operation, though traditional slow sand filters may require several days to re-establish their ability to remove bacteria and viruses. Because the BSF media is cleaned-in-place it never loses its ability to remove bacteria and viruses.

### Low Operating Head Polishing Sand Filter (LHPF)

The Low Operating Head Polishing Sand Filter (LHPF) according to the invention is an important improvement and grew out of a need to provide an effective, physically simple, operationally simple and robust, low-cost water treatment solution for use in small scale water treatment plants in circumstances where capital and operational resources are limited. The LHPF combines the water treatment capability of the Biosand Water Filter (BSF) with the method and apparent convenience of cleaning associated with rapid and pressure sand filters. (Water polishing refers to the ability of a filter to remove very small particles from water.) The design of the LHPF eliminates the production of excessive volumes of waste water and need for extensive pre-treatment and use of chemicals.

The design of the Low Operating Head Polishing Sand Filter (LHPF) exhibits the same particulate removal ability of slow sand filtration or the BSF but incorporates a unique clean-in-place system that has the same simplicity of design and operation as that used in pressure sand filters (without the need for the massive underdrain and backwash system characteristic of rapid sand filters), and the production of very low volumes of waste water similar to that associated with the BSF technology. As well, the LHPF is comparatively simple and inexpensive to design, construct, house and operate when compared to traditional slow sand filtration and rapid and pressure sand filtration.

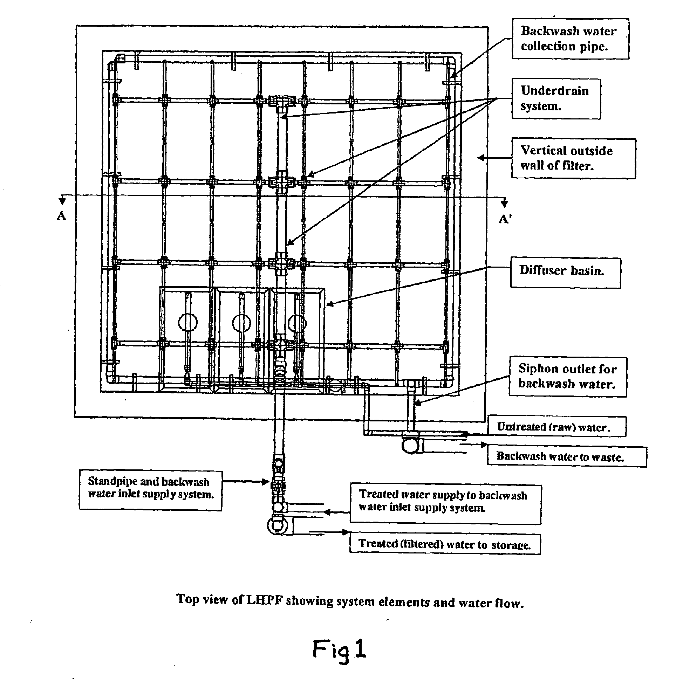

Figure 1 illustrates a top view of the low operating head polishing sand filter with system elements and water flow. The backwash water collection pipe, the underdrain system, the vertical outside wall of the filter, the diffuser basin, the siphon outlet for the backwash water, the pipes for the untreated water and backwash water to waste, the treated water supply to backwash water inlet supply system, the treated water to storage and the standpipe and backwash water inlet supply system are indicated by boxes and lead lines.

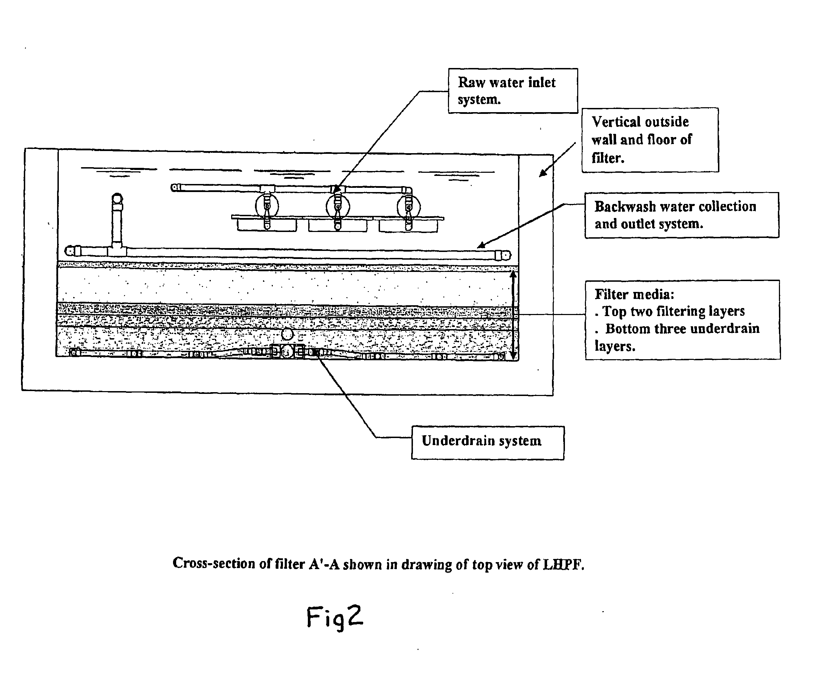

Figure 2 illustrates a cross-section of filter A'-A of Figure 1. The raw water inlet system, the vertical outside of the wall and floor of the filter, the backwash water collection and outlet system, the filter media comprised of the top two filtering layers and the bottom three underdrain layers, and the underdrain system are indicated by boxes and lead lines.

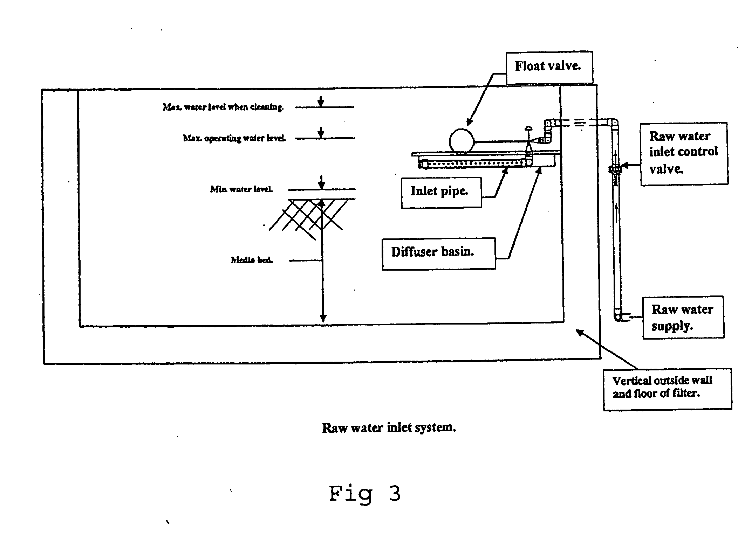

Figure 3 illustrates an elevation of a raw water inlet system. The inlet pipe, the diffuser basin, the float valve, the raw water inlet control valve, the pipe for the raw water supply and the vertical outside wall and the floor of the filter are indicated by boxes and lead lines.

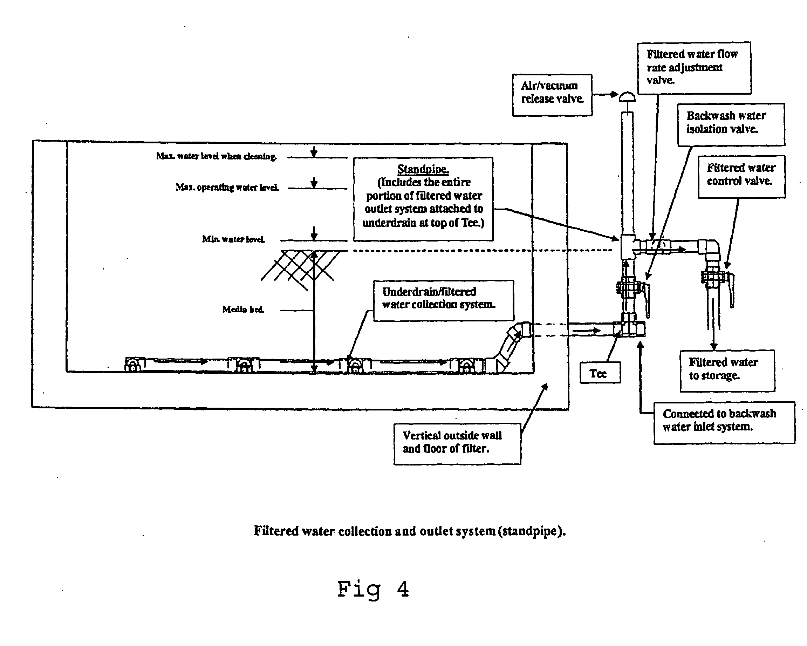

Figure 4 illustrates an elevation of a filtered water collection and outlet system (standpipe). The standpipe including the entire portion of the filtered water outlet system attached to the underdrain at the top of the tee connection, the air/vacuum release valve, the filtered water flow rate adjustment valve, the backwash water isolation valve, the filtered water control valve, the pipe for the filtered water to the storage, the tee connection to the backwash water inlet system, the pipe for the underdrain/filtered water collection system, and the vertical outside wall and floor of the filter are indicated by boxes and lead lines.

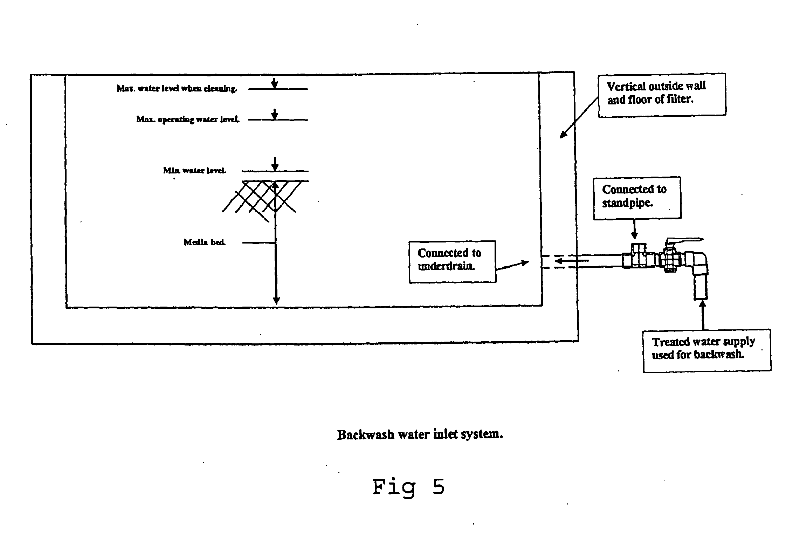

Figure 5 illustrates an elevation of a backwash water inlet system. The vertical outside wall and the floor of the filter, the pipe for the underdrain, the connection to the standpipe and the pipe for the treated water supply used for the backwash are indicated by boxes and lead lines.

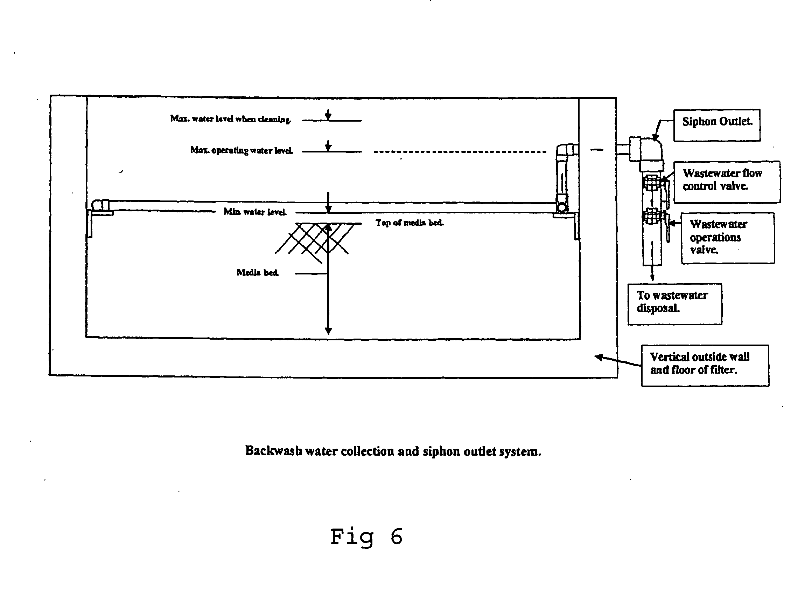

Figure 6 illustrates an elevation of a backwash water collection and siphon outlet system. The siphon outlet, the wastewater flow control valve, the wastewater operations valve, the pipe for the waste disposal and the vertical outside wall and floor of the filter are indicated by boxes and lead lines.

### Design Features

The design of the LHPF incorporates all of the treatment and structural benefits associated with the BioSand Water Filter with the simplicity and convenience of cleaning associated with pressure sand filters.

The LHPF uses a unique filter bed which has filtration characteristics which are the same as or better than the BSF, but which eliminate the surface scraper used by the BSF to break up the surface of the media bed during cleaning. The LHPF also incorporates an underdrain and backwash system similar to that used in pressure filters.

The flow of filtered water in the LHPF is controlled using a 'weir-type' outlet system (outlet standpipe) connected directly to the filter underdrain system. This concept is similar to that used with traditional slow sand filters and the BSF. The use of the outlet standpipe ensures that the filter bed cannot be dewatered; an occurrence that would allow air to enter the media bed and risk air binding that could only be resolved by initiating a backwash cycle. The maximum flow from the filter (often specified by regulatory authorities) is established during filter commissioning by the provision and adjustment of a filtered water flow rate adjustment valve, that is not used during filter operations. During normal operation the flow of water into the filter and the maximum depth of water over the filter bed are established by mechanical float valves attached to the raw water inlet pipes within the filter itself. The flow of water into the filter cannot exceed its production. The combination of permissible maximum head on the filter bed and restricted flow rate eliminates the risk of compaction of the top layer of the media bed. The erosive power of the water from the raw water inlet system is eliminated by passing the water from the mechanical float controlled valves into perforated basins (called diffuser basins) located a short distance above the minimum depth of water in the filter. This ensures that the surface of the media cannot be disturbed (which is very important for slow sand filters). The rate of filtered water flow, the filter bed design and the hydraulic head loss across the filter bed ensure that the filter will meet water treatment expectations consistent with that of slow sand filters performing the same treatment function.

The outlet system is connected to the treated water supply used for filter backwashing. Once it is determined that filter production is unacceptably low, (perhaps determined by the examination of water glasses permitting observation of water depth in the filter and outlet head), filter production is isolated and backwash water is allowed to enter into the underdrain system. An air-vacuum control valve which is attached to the top of the outlet standpipe ensures that the filter produces treated water with the outlet under atmospheric pressure and backwashes under full backwash pump pressure.

In one embodiment, the media bed used in the LHPF can consist of at least five layers (depending on the scale of filter) of differently sized crushed quartzite (silica) each meeting the material characteristics required for slow, rapid or pressure sand filters as stated by the American Water Works Association (AWWA). The upper three layers use uniform graded sizes (effective sizes of 0.15mm, 0.35mm and 1.0mm respectively). The top layer provides most of the filtering action. The bottom two layers of the media bed (1/8 to 1/2 inch and 1/2 to 1 1/2 inch (3,175 to 12,7 mm and 12,7 to 38,1 mm) respectively) allow uniform vertical flow, downward and upward, through the filtering layers while filtration is in progress and even distribution of the water across the entire bottom of the filter bed during a backwash. The use of crushed quartzite, rather than rounded particles of quartzite, reduces the magnitude of backwash flow rates required to fluidize the top two layers. The maximum operating depth is selected such that the maximum hydraulic head produced across the filter bed does not result in filter bed compaction.

Other sizes of media can work. The critical issues are that the top two layers must have an effective size less than 0.35 mm and the uniformity coefficient must be 2.05 or less. The top layer should have an effective size of 1/2 or less than the second filtering layer. The finest (top) underdrain layer must have an effective size at least 2 times that of the filtering layer immediately above it and have a uniformity coefficient of 2 or less. Underdrain layers below the upper most underdrain layer must be sufficiently large to prevent intermixing of the layers. The key to the invention is to size the top two layers so that they are the only layers that fluidize. Because both layers are composed of particles of distinctly different sizes and with very low uniformity coefficients, they will settle into beds in exactly the same way after every backwashing. The backwash flow rate is controlled so that only these two layers fluidize. The fluidizing that occurs is much more vigorous than simple mechanical agitation. The volume of backwash is limited by the maximum depth of water in the filter when cleaning. This volume is carefully calculated to conform with conventional criteria within the field of rapid sand filtration design.

The backwash of the LHPF is only intended to break up the surface layer (where virtually all of the material is collected) and resuspend captured material. This is similar to a BSF, but unlike the LHPF, backwash process used by rapid sand filters and pressure sand filters, not only fluidizes the bed but also permits scouring and flushing of captured material from well within the filter bed itself. The backwash of a rapid sand or pressure sand filter must be long enough to ensure that all of the captured particles have been flushed from the interior of the media. Mechanical surface agitation might be used if normal backwash is not considered sufficient.

As inferred above, the LHPF uses an underdrain system and backwash method that closely resembles the method used in pressure sand filters but it is not nearly as extensive. The reason for this is that rapid sand filters must use relatively large flow rates of backwash water at low head to fluidize a deeper media bed composed of larger particles. In comparison, the LHPF must only fluidize the uppermost two layers for a short period of time to effectively remove and suspend captured particulate material in the backwash water. When the backwash flow is stopped, the top two fluidized layers in the LHPF collapse vertically into layers resembling the original filter bed. This is because each layer has a very different effective size and both layers are comprised of uniformly graded particles. Remaining backwash water is 'squeezed' out and upward from the filter media and the cleaned media bed settles.

The design of the underdrain system used in a LHPF is fundamentally different from that used in a BSF system. In the BSF, a very gentle reverse flow (a kind of low flow rate backwash) is used that cannot fluidize the filter bed. Media beds used in slow sand filters are not intended to be fluidized. The reverse flow used in the BSF is intended to remove any gases that have been captured within the filter media and to provide sufficient water on the surface of the media to facilitate the suspension of captured particulate material (achieved by agitating the surface of the media layer). The suspension is then removed and the filter is ready for operation.

The wastewater produced during the backwash process is removed using perforated pipes located along and attached to the interior walls of the filter. The holes in the pipe face slightly downward to avoid capturing any of the fluidized media. They are located approximately ten centimetres or less above the surface of the media (all of the water is not removed). The perforations in the underdrain pipe system must be sufficiently small to prevent any of the particles in the bottommost underdrain layer from entering the system. The perforated pipes are attached to a siphon spillway system that also acts as an emergency overflow system. The rate of flow through this system is controlled by a dedicated waste water flow control valve which is not greater than the capacity to take the wastewater to disposal. A second, waste water operations valve is used to alternatively prevent flow from the filter until backwash is completed and is then opened to facilitate the siphon evacuation process. The same valve is left open after backwash is completed to provide emergency overflow protection. The wastewater collection system and the siphon outlet system and method of control are unique. While siphon spillways per se are not novel, siphon spillways controlled and operated in the manner included in the design of the LHPF are novel.

It is advisable to divide the entire filtration plant into equal segments that can be cleaned independently and successfully using lower capacity distribution pumps and produce flow rates and volumes of wastewater that can be economically evacuated and disposed of.

### Comparison of Sand Filters

All forms of slow sand filtration are very effective in removing very small particles, including parasites, bacteria and viruses, and oxidized iron and manganese from water without the use of pre-treatment associated with conventional water treatment. Traditional slow sand filtration technology is not considered practical if the untreated water has a high turbidity or contains oxidized iron or manganese. The BSF overcomes this limitation by incorporating a clean-in-place system that eliminates the need for filter scraping or surface media removal. However, the practicality of the mechanical system used by the BSF as part of its clean-in-place system is limited to lower capacity water treatment systems often well below the demands of even small communities. Traditional slow sand filtration does not produce any waste water and the BSF produces very little when compared to the volumes produced by rapid and pressure sand filters. BSF's do not lose their ability to treat water after cleaning. Traditional slow sand filters recover their ability to remove bacteria and viruses after a few days and rapid and pressure sand filters must produce to waste until the water they produce exhibits a sufficiently low turbidity (to guarantee parasite cyst and oocyst removal). Slow sand and BSF's are very simple to operate when compared to rapid and pressure sand filters. Slow sand filters are much larger (at least 10 times the surface area for the same capacity) than rapid sand or pressure filters. Traditional slow sand filters are double the surface area of BSF's.

The following table compares the effectiveness, physical and operational characteristics and costs associated with traditional slow sand filters (TSSF), the BioSand Water Filter (BSF), rapid sand filters, pressure sand filters and the LHPF.

**Table 1.0 Sand Filter Comparison.**

| **Characteristic** | **Traditional Slow Sand Filter (TSSF)** | **BioSand Water Filter (BSF)** | **Rapid Sand Filter (RSF)** | **Pressure Sand Filter (PSF)** | **Low Op. Head Polishing Sand Filter (LHPF)** |
|---|---|---|---|---|---|
| | | | | | |
| **effectiveness in removing:** | | | | | |
| Pathogens | | | | | |
| Parasites | Very effective | Very effective | Possible | Possible | Very effective |
| Bacteria | Very effective | Very effective | Not effective | Not effective | Very effective |
| Viruses | Very effective | Very effective | Not effective | Not effective | Very effective |
| Particulates | | | | | |
| Silt | Very effective and practical at low turbidity. | Very effective and practical at all turbidities. Pre-treatment may be useful. | Effective as part of conventional treatment systems. (These include use of coagulants and clarification prior to filtration.) | Effective as part of conventional treatment systems. (These include use of coagulants and clarification prior to filtration.) | Very effective and practical at all turbidities. Pre-treatment may be useful. |
| Clay | | | | | |
| Organic | | | | | |
| Oxidized | | | | | |
| Iron | Effective but not usually practical. | Very effective and practical. | Not sufficiently effective or normally used. | Not sufficiently effective or normally used. | Very effective and practical. |
| Manganese | | | | | |
| Arsenic | Not used because pre-treatment impractical | Very effective and practical with required pre-treatment. | Not sufficiently effective or normally used | Not sufficiently effective or normally used | Very effective and practical with required pre-treatment |
| Fluoride | Not used because pre-treatment impractical | Very effective and practical with required pre-treatment | Not sufficiently effective or normally used | Not sufficiently effective or normally used | Very effective and practical with required pre-treatment |
| Dissolved organics | Not used because pre-treatment impractical | Very ettective and practical with required pre-treatment | Very effective and practical with required pre-treatment | Very effective and practical with required pre-treatment | Very effective and practical with required pre-treatment |
| | | | | | |
| **Opportunity for Breakthrough** | Not possible. | Not possible. | Normal. Used to indicate need to clean. | Normal. Used to indicate need to clean. | Not possible. |
| | | | | | |
| **Structural Issues** | | | | | |
| Relative surface area | Very large. | Large. | Small. | Very Small. | Large. |
| Relative height | Deep. | Shallow | Very deep. | Shallow. | Shallow. |
| Piping requirements | Minimal. | Minimal. | Extensive. | Extensive. | Minimal. |
| Engineering and Construction complexity | Minimal. | Minimal. | Complex. | Minimal. | I Minimal. |
| | | | | | |
| | | | | | |
| **Ref. Production Capacity Practical Range** | Community scale. | Household to small community. (Though can be used within communities of any scale.) | Community scale. (Impractical at small scales.) | Small community. (Impractical at large scales.) | Household to community scale. |
| | | | | | |
| **Rel. Volume Wastewater Production** | Nil. | Very low amounts. | Very large amounts. | Very large amounts. | Very low amounts. |
| | | | | | |
| **Operational Complexity** | Very Simple. | Simple. | Complex. | Relatively complex. | Simple. |
| | | | | | |
| **Relative Construction Cost** | Low. | Very low. | High. | Relatively high. (Usually come as assembled components or package plants.) | Very low. |
| Need for cover in winter | Yes. | Yes. | Yes. | Yes. | Yes. |
| | | | | | |
| **Relative Operating and Cleaning Cost** | | | | | |
| Manpower - skill level required to successfully operate filter in long term | Low | Low | High. | High. | Low. |
| Manpower | Low but can be significant if water has high conc. of suspended solids. (Not convenient to clean.) | Low. | Low. | Low. | Very low. |
| Method of cleaning | Manual scraping. | Manual or automatic cleaning of filter surface. | Vigorous backwash usually automatically initiated with filtration to waste. | Vigorous backlash usually automatically initiated with filtration to waste. | Limited backwash intended to clean filter surface layer that may be automatically or manually initiated. |
| Filter to waste requirements | Not required (suspended solids and | Not required (suspended solids and | Required to flush filter media and until | Required to flush filter media and until | Not required (suspended solids and |
| | parasites removed without formation of biolayer) | parasites removed without formation of biolayer) | properly conditioned. | properly conditioned. | parasites removed without formation of biolayer) |
| Chemicals in wastewater | Nil, as pre-treatment is not practical. | Nil, if pre-treatment is not used Pre-treatment is often not necessary for adequate filter performance. | Present because pre-treatment using coagulants is required to achieve system performance. | Typically present because pre-treatment using coagulants is required to achieve system performance. | Nil, if pre-treatment is not used. Pre-treatment is often not necessary for adequate filter performance. |
| Wastewater generation | Almost nil. | Very low. | Very high. | Very high. | Very low. |
| Energy (pumps, etc.) | Very low. | Very low. | High. | Very high. | Low. |
| Overall cost of op/maint. | Low. | Very low. | High. | High. | Low. |
| | | | | | |
| | | | | | |

The following observations can be made:
1. The TSSF, BSF and LHPF's are all very effective in removing pathogens.
2. All types of slow sand filters are very effective at removing inorganic or organic particulate material with or without pre-treatment. The TSSF is limited, however, because a significant effort is required to clean it.
3. The TSSF, BSF and LHPF will not exhibit break through phenomena. Thus, it is impossible for these filters to produce untreated water. Unlike rapid sand and pressure sand filters, TSSF, BSF and LHPF continue to improve their ability to treat water until such time as the captured material completely stops the flow of water through them. The TSSF, BSF and LHPF are cleaned when their capacity drops to unacceptably low levels (50% of maximum production is normal).
4. The TSSF, BSF and LHPF's are all very effective in removing oxidized iron and manganese though the TSSF is not practical because of the significant effort required to clean it.
5. Except for having a relatively larger surface area, the LHPF and the BSF are structurally compact and simple to construct. Thus their construction costs are very low.
6. The TSSF, BSF, rapid sand filters (RSF) and LHPF are all appropriate for use in large scale applications.
7. The BSF, pressurized sand filter (PSF) and LHPF are particularly appropriate for use in small scale applications.
8. The TSSF produces almost no waste water. The BSF and the LHPF produce only minor amounts of waste water. The RSF and the PSF produce very large amounts of waste water.
9. The TSSF is simple to operate but it requires significant effort to clean.
10. The BSF and the LHPF are simple to operate and clean.
11. The RSF and PSF are complex to operate effectively but are relatively simple to clean.
12. The operator skill level required to successfully operate the TSSF, BSF and LHPF is relatively low. The skill level required to successfully operate RSF and PSF is quite high.
13. The relative overall costs of operation and maintenance of the TSSF, BSF and LHPF is low to very low when compared to the costs of operation and maintenance of the RSF and PSF.
   While a number of exemplary aspects and embodiments have been discussed above, those of skill in the art will recognize certain modifications, permutations, additions and sub-combinations thereof. It is therefore intended that the following appended claims and claims hereafter introduced are interpreted to include all such modifications, permutations, additions and sub-combinations as are within their true spirit and scope.

## Claims

1. A low operating head polishing sand filter comprising:
(a) a plural-layer media bed comprising layers of crushed quartzite, wherein
(i) the top two layers have an effective particle size of less than 0.35 mm and a uniformity coefficient of 2.05 or less;
(ii) the top layer has an effective particle size of 1/2 or less than a second filtering layer;
(iii) the finest (top) underdrain layer has an effective particle size at least 2 times that of the filtering layer immediately above it and a uniformity coefficient of 2 or less; and
(iv) underdrain layers below the finest (top) underdrain layer are sufficiently large to prevent intermixing of the layers;
whereby filtered material collects on a surface layer;
(b) an untreated water inlet system;
(c) an underdrain system;
(d) a filtered water collection and outlet system; and
(e) a backwash water inlet, collection and siphon outlet system, said backwash water inlet being controllable to introduce backwash water into the filter to break up the top layer to resuspend collected filtered material,
whereby the top two layers of the media bed are fluidized when backwash water is introduced through the backwash water inlet.

2. A filter as claimed in claim 1 wherein the underdrain system comprises a plurality of pipes.

3. A filter as claimed in claim 1 including a perforated diffuser basin located above the media bed.

4. A filter as claimed in claim 1 including an outlet standpipe connected to the underdrain system.

5. A filter as claimed in claim 1 wherein flow of treated water from the filter is controlled by a filtered water flow rate adjustment valve.

6. A filter as claimed in claim 1 wherein depth of water over the filter media bed is controlled by a float valve.

7. A filter as claimed in claim 1 wherein the outlet system is connected to a treated water supply used for filter backwashing.

8. A filter as claimed in claim 4 including an air-vacuum control valve attached to the outlet standpipe.

9. A filter as claimed in claim 1 wherein the media bed is comprised of at least five layers of crushed quartzite, the upper three layers from top to bottom having graded sizes of 0.15 mm, 0.35 mm and 1.0 mm respectively, and the bottom two layers having from top to bottom graded sizes of 3.175 to 12.7 mm and 12.7 to 38.1 mm respectively.

10. A method of operating a low operating head polishing sand filter constructed of:
(a) a plural-layer media bed comprising layers of crushed quartzite, wherein
(i) the top two layers have an effective particle size of less than 0.35 mm and a uniformity coefficient of 2.05 or less;
(ii) the top layer has an effective particle size of 1/2 or less than the second filtering layer;
(iii) the finest (top) underdrain layer has an effective particle size at least 2 times that of the filtering layer immediately above it and a uniformity coefficient of 2 or less; and
(iv) underdrain layers below the finest (top) underdrain layer are sufficiently large to prevent intermixing of the layers;
whereby filtered material collects on a surface layer;
(b) an untreated water inlet system;
(c) an underdrain system;
(d) a filtered water collection and outlet system; and
(e) a backwash water inlet, collection and siphon outlet system, said method comprising:
(f) passing untreated water through the inlet system and downwardly through the plural-layer media bed:
(g) determining when filter production is unacceptably low; and
(h) after it has been determined that filter production is unacceptably low, backwashing by passing treated water upwardly through the backwash water inlet at a flow rate sufficient to break up the top layer to resuspend collected filtered material,
whereby the top two layers of the media bed are fluidized.

11. A method as claimed in claim 10 wherein the volume of the backwash water is limited by the maximum depth of water in the filter when cleaning.

12. A method as claimed in claim 10 wherein the media bed is comprised of at least five layers of crushed quartzite, the upper three layers having graded sizes of 0.15 mm, 0.35 mm and 1.0 mm respectively, and the bottom two layers having sizes of 3.175 to 12.7 mm and 12.7 to 38.1 mm respectively.

13. A method as claimed in claim 10 wherein waste water produced during the backwashing is removed through a system of perforated pipes attached to a siphon spillway system, wherein the flow rate is controlled by a dedicated waste water flow control valve and is not greater than the capacity to take waste water to disposal, wherein a waste water operations valve is used to alternatively prevent flow from the filter until backwash is completed and is then opened to facilitate a siphon evacuation process, and wherein the waste water operations valve is left open after the backwashing is completed to provide emergency overflow protection.

## Patentansprüche

1. Poliersandfilter mit niedriger Förderhöhe, der Folgendes umfasst:
(a) ein Mehrschichtmedienbett, das Schichten aus gestoßenem Quarzit enthält, wobei
(i) die obersten zwei Schichten eine effektive Teilchengröße von weniger als 0,35 mm und einen Gleichförmigkeitskoeffizienten von maximal 2,05 haben;
(ii) die oberste Schicht eine effektive Teilchengröße von maximal der Hälfte einer zweiten Filterschicht hat;
(iii) die feinste (oberste) Drainageschicht eine effektive Teilchengröße von mindestens dem Zweifachen der unmittelbar darüberliegenden Filterschicht und einen Gleichförmigkeitskoeffizienten von maximal 2 hat;
und
(iv) Drainageschichten unter der feinsten (obersten) Drainageschicht hinreichend groß sind, um ein gegenseitiges Vermischen der Schichten zu verhindern;
wobei sich gefiltertes Material auf einer Oberflächenschicht ansammelt;
(b) ein Einlasssystem für unbehandeltes Wasser;
(c) ein Drainagesystem;
(d) ein System zum Auffangen und Auslassen von gefiltertem Wasser; und
(e) ein Einlass-, Auffang- und Heberauslasssystem für Rückspülwasser, wobei der Rückspülwassereinlass veranlasst werden kann, Rückspülwasser in den Filter zu leiten, um die oberste Schicht aufzubrechen und aufgefangenes gefiltertes Material zu resuspendieren,
wobei die obersten zwei Schichten des Medienbettes fluidisiert werden, wenn Rückspülwasser durch den Rückspülwassereinlass eingeleitet wird.

2. Filter nach Anspruch 1, wobei das Drainagesystem mehrere Rohre umfasst.

3. Filter nach Anspruch 1, der ein perforiertes Diffusorbecken umfasst, das sich über dem Medienbett befindet.

4. Filter nach Anspruch 1, der ein Auslassstandrohr umfasst, das mit dem Drainagesystem verbunden ist.

5. Filter nach Anspruch 1, wobei der Fluss des behandelten Wassers von dem Filter durch einen Filterwasserströmungsratenjustierventil gesteuert wird.

6. Filter nach Anspruch 1, wobei die Tiefe von Wasser über dem Filtermedienbett durch ein Schwimmerventil gesteuert wird.

7. Filter nach Anspruch 1, wobei das Auslasssystem mit einer Zuleitung für behandeltes Wasser, die zur Filterrückspülung verwendet wird, verbunden ist.

8. Filter nach Anspruch 4, der ein Luft-Vakuum-Steuerventil umfasst, das an dem Auslassstandrohr angebracht ist.

9. Filter nach Anspruch 1, wobei das Medienbett aus mindestens fünf Schichten aus gestoßenem Quarzit besteht, wobei die oberen drei Schichten von oben nach unten abgestufte Größen von 0,15 mm, 0,35 mm bzw. 1,0 mm haben und die unteren zwei Schichten von oben nach unten abgestufte Größen von 3,175 bis 12,7 mm bzw. 12,7 bis 38,1 mm haben.

10. Verfahren zum Betreiben eines Poliersandfilters mit niedriger Förderhöhe, der aus Folgendem besteht:
(a) einem Mehrschichtmedienbett, das Schichten aus gestoßenem Quarzit enthält, wobei
(i) die obersten zwei Schichten eine effektive Teilchengröße von weniger als 0,35 mm und einen Gleichförmigkeitskoeffizienten von maximal 2,05 haben;
(ii) die oberste Schicht eine effektive Teilchengröße von maximal der Hälfte einer zweiten Filterschicht hat;
(iii) die feinste (oberste) Drainageschicht eine effektive Teilchengröße von mindestens dem Zweifachen der unmittelbar darüberliegenden Filterschicht und einen Gleichförmigkeitskoeffizienten von maximal 2 hat;
und
(iv) Drainageschichten unter der feinsten (obersten) Drainageschicht hinreichend groß sind, um ein gegenseitiges Vermischen der Schichten zu verhindern;
wobei sich gefiltertes Material auf einer Oberflächenschicht ansammelt;
(b) einem Einlasssystem für unbehandeltes Wasser;
(c) einem Drainagesystem;
(d) einem System zum Auffangen und Auslassen von gefiltertem Wasser; und
(e) einem Einlass-, Auffang- und Heberauslasssystem für Rückspülwasser,
wobei das Verfahren Folgendes umfasst:
(f) Leiten von unbehandeltem Wasser durch das Einlasssystem und abwärts durch das Mehrschichtmedienbett,
(g) Feststellen, wann die Filterproduktion inakzeptabel gering ist; und
(h) nachdem festgestellt wurde, dass die Filterproduktion inakzeptabel gering ist, Rückspülen durch Leiten von behandeltem Wasser aufwärts durch den Rückspülwassereinlass mit einer Strömungsrate, die ausreicht, um die oberste Schicht aufzubrechen und aufgefangenes gefiltertes Material zu resuspendieren, wobei die obersten zwei Schichten des Medienbettes fluidisiert werden.

11. Verfahren nach Anspruch 10, wobei das Volumen des Rückspülwassers durch die maximale Tiefe des Wassers in dem Filter beim Reinigen begrenzt wird.

12. Verfahren nach Anspruch 10, wobei das Medienbett aus mindestens fünf Schichten aus gestoßenem Quarzit besteht, wobei die oberen drei Schichten abgestufte Größen von 0,15 mm, 0,35 mm bzw. 1,0 mm haben und die unteren zwei Schichten Größen von 3,175 bis 12,7 mm bzw. 12,7 bis 38,1 mm haben.

13. Verfahren nach Anspruch 10, wobei Abwasser, das beim Rückspülen entsteht, durch ein System von perforierten Rohren ausgetragen wird, die an ein Heber-Überfallkanalsystem angeschlossen sind, wobei die Strömungsrate durch ein dediziertes Abwasserströmungssteuerventil gesteuert wird und nicht größer als die Kapazität zum Aufnehmen von Abwasser zum Entsorgen ist, wobei ein Abwasseroperationsventil dafür verwendet wird, alternativ ein Strömen aus dem Filter zu verhindern, bis das Rückspülen vollendet ist, und dann geöffnet wird, um einen Heberentleerungsprozess zu ermöglichen, und wobei das Abwasseroperationsventil offen gelassen wird, nachdem das Rückspülen vollendet ist, um einen Notfallüberlaufschutz bereitzustellen.

## Revendications

1. Filtre à sable à faible pression filtrante pour le traitement final, comprenant :
(a) un lit de matériau multicouche comprenant des couches de quartzite broyé, dans lequel
(i) les deux couches supérieures ont une granulométrie efficace inférieure à 0,35 mn et un coefficient d'uniformité de 2,05 ou moins ;
(ii) la couche supérieure a une granulométrie effective égale à la moitié, ou moins, de celle d'une deuxième couche filtrante ;
(iii) la couche drainante la plus fine (supérieure) a une granulométrie effective d'au moins deux fois celle de la couche filtrante située immédiatement au-dessus, et un coefficient d'uniformité de 2 ou moins ; et
(iv) des couches drainantes en-dessous de la couche drainante la plus fine (supérieure) sont suffisamment larges pour empêcher que les couches ne se mélangent ;
dans lequel le matériau filtré est recueilli sur une couche superficielle ;
(b) un réseau d'entrée de l'eau non traitée ;
(c) un réseau de drains de sortie ;
(d) un réseau de collecte et de sortie de l'eau filtrée ; et
(e) un réseau d'entrée de l'eau de lavage à contre-courant,
de collecte et de sortie du siphon, ledit d'orifice d'entrée de l'eau de lavage à contre-courant pouvant être régulé de façon à introduire l'eau de lavage à contre-courant dans le filtre de façon à briser la couche supérieure dans le but de remettre en suspension le matériau filtré collecté,
dans lequel les deux couches supérieures du lit de matériau est fluidisées lorsque l'eau de lavage à contre-courant est introduite par l'orifice d'entrée de l'eau de lavage à contre-courant.

2. Filtre selon la revendication 1, dans lequel le réseau de drains de sortie comprend une pluralité de tuyaux.

3. Filtre selon la revendication 1, comprenant un bassin diffuseur perforé situé au-dessus du lit de matériau.

4. Filtre selon la revendication 1, comprenant une colonne montante de sortie raccordée au réseau de drains de sortie.

5. Filtre selon la revendication 1, dans lequel le débit de l'eau traitée sortant du filtre est régulé par une vanne de réglage du débit de l'eau filtrée.

6. Filtre selon la revendication 1, dans lequel la profondeur de l'eau au-dessus du lit de matériau filtrant est régulée par une vanne à flotteur.

7. Filtre selon la revendication 1, dans lequel le réseau de sortie est raccordé à une alimentation en eau traitée, utilisée pour le lavage du filtre à contre-courant.

8. Filtre selon la revendication 4, comprenant une soupape casse-vide fixée à la colonne montante de sortie.

9. Filtre selon la revendication 1, dans lequel le lit de matériau est constitué d'au moins cinq couches de quartzite broyé, les trois couches supérieures ayant, de haut en bas, des granulométries échelonnées, respectivement de 0,15 mm, 0,35 mm et 1,0 mm, et les deux couches inférieures ayant, de haut en bas, des granulométries échelonnées, respectivement de 3,175 à 12,7 mm et de 12,7 à 38,1 mm.

10. Procédé d'exploitation d'un filtre à sable à faible pression filtrante pour traitement final, consistant en :
(a) un lit de matériau multicouche comprenant des couches de quartzite broyé, dans lequel
(i) les deux couches supérieures ont une granulométrie efficace inférieure à 0,35 mn et un coefficient d'uniformité de 2,05 ou moins ;
(ii) la couche supérieure a une granulométrie effective égale à la moitié, ou moins, de celle d'une deuxième couche filtrante ;
(iii) la couche drainante la plus fine (supérieure) a une granulométrie effective d'au moins deux fois celle de la couche filtrante située immédiatement au-dessus, et un coefficient d'uniformité de 2 ou moins ; et
(iv) des couches drainantes en-dessous de la couche drainante la plus fine (supérieure) sont suffisamment larges pour empêcher que les couches ne se mélangent ;
dans lequel le matériau filtré est recueilli sur une couche superficielle ;
(b) un réseau d'entrée de l'eau non traitée ;
(c) un réseau de drains de sortie ;
(d) un réseau de collecte et de sortie de l'eau filtrée ; et
(e) un réseau d'entrée de l'eau de lavage à contre-courant, de collecte et de sortie du siphon,
ledit procédé comprenant :
(f) le passage de l'eau non traitée à travers le réseau d'entrée et vers le bas à travers le lit de matériau multicouche ;
(g) la détermination du moment où la production du filtre est inacceptablement faible ; et
(h) après qu'il a été déterminé que la production du filtre est inacceptablement faible, le lavage à contre-courant par passage de l'eau traitée de bas en haut à travers l'orifice d'entrée de l'eau de lavage à contre-courant, a un débit suffisant pour briser la couche supérieure dans le but de remettre en suspension le matériau filtré collecté,
dans leqquel les deux couches supérieures du lit de matériau sont fluidisées.

11. Procédé selon la revendication 10, dans lequel le volume de l'eau de lavage à contre-courant est limité par la profondeur maximale de l'eau dans le filtre lors du nettoyage.

12. Procédé selon la revendication 10, dans lequel le lit de matériau est constitué d'au moins cinq couches de quartzite broyé, les trois couches supérieures ayant, de haut en bas, des granulométries échelonnées, respectivement de 0,15 mm, 0,35 mm et 1,0 mm, et les deux couches inférieures ayant, de haut en bas, des granulométries échelonnées, respectivement de 3,175 à 12,7 mm et de 12,7 à 38,1 mm.

13. Procédé selon la revendication 10, dans lequel les eaux usées produites pendant le lavage à contre-courant sont éliminées par un réseau de tuyaux perforés fixés à un système de déversoir en siphon, le débit étant régulé par une vanne dédiée de régulation du débit des eaux usées, et n'étant pas supérieur à la capacité à envoyer les eaux usées aux rejets, une vanne d'exploitation des eaux usées étant utilisée pour empêcher en alternance l'écoulement à partir du filtre jusqu'à la fin de l'opération de lavage à contre-courant, puis étant ouverte pour faciliter un processus d'évacuation du siphon, la vanne d'exploitation des eaux usées étant laissée ouverte après que le lavage à contre-courant est terminé, pour fournir une protection urgence contre les débordements.
